# EUROPÄISCHE PATENTSCHRIFT

(11) **EP 0 651 042 B1**
(45) Veröffentlichungstag und Bekanntmachung des Hinweises auf die Patenterteilung: **07.01.1999**
(21) Anmeldenummer: 94115524.4
(22) Anmeldetag: 01.10.1994
(51) Int. Cl.: C10K 1/16, B01D 53/14

(54) **Verfahren zum Reinigen von Druckgasen**
Process for cleaning pressurized gases
Procédé d'épuration de gaz sous pression

(30) Priorität: 28.10.1993 DE 4336790
(43) Veröffentlichungstag der Anmeldung: 03.05.1995
(73) Patentinhaber: RUHR OEL GmbH, 45896 Gelsenkirchen (DE)
(72) Erfinder: Kuijl, Willem, D-45239 Essen (DE); Mumme, Wolfgang, D-45739 Oer-Erkenschwick (DE)
(74) Vertreter: Berg, Dirk, Dr.

(56) Entgegenhaltungen:
- EP-A- 0 081 241
- WO-A-88/00085
- WO-A-92/04102
- DE-A- 2 260 248
- DE-A- 4 115 532
- GB-A- 2 102 696

## Beschreibung

Die Erfindung betrifft ein Verfahren zum Reinigen von Druckgasen durch Tieftemperaturgaswäsche und anschließendes Ausgasen der beladenen Waschflüssigkeit durch Entspannen, Evakuieren, Austreiben und Erhitzen.

Das vorliegende Verfahren dient der Entfernung insbesondere von Metallcarbonylverbindungen, die im Verein mit anderen Nebenprodukten insbesondere bei der Spaltung schwermetallhaltiger Brennstoffe zur Gewinnung von Synthesegas anfallen.

Synthesegas kann nach verschiedenen Verfahren, beispielsweise durch Steamreforming von Erdgas, Flüssiggas oder Naphtha durch Verfahren, die aus einer Kombination von Partialoxidation und Steamreformingverfahren, mit oder ohne Zugabe von CO₂, bestehen oder durch Verfahren zur Partialoxidation von gasförmigen oder flüssigen bis schwerflüssigen Kohlenwasserstoffen erzeugt werden. Das Synthesegas besteht im wesentlichen aus Wasserstoff, Kohlenwasserstoffen, Kohlendioxid und Kohlenmonoxid mit den aus den eingesetzten Rohstoffen stammenden Nebenprodukten wie insbesondere H₂S, HCN, COS, HSCN aber auch Metallcarbonylverbindungen. Derartige Metallcarbonylverbindungen, die neben den genannten Nebenprodukten als störende Gasverunreinigungen aus dem Rohsynthesegas entfernt werden müssen, gehen vermutlich auf den Einsatz stark schwermetallhaltiger Rückstände der Mineralölverarbeitung zurück.

In einer Rectisolanlage (vgl. Hydrocarbon Processing, April 1990, 89) wird das Rohgas zunächst zur HCN-Entfernung mit einer kleinen Teilmenge der regenerierten Waschflüssigkeit, hier Methanol, vorgewaschen. Anschließend wird das Rohgas mit der Hauptmenge des regenerierten Methanols gewaschen, um das H₂S zu absorbieren. Sowohl das beladene Vorwaschmethanol als auch das beladene Hauptwaschmethanol enthalten die genannten Schwermetallverbindungen.

Ein Verfahren zum Reinigen von Druckgasen aus der Spaltung schwermetallhaltiger Brennstoffe durch ein- oder mehrstufige Tieftemperaturgaswäsche bei - 60 bis 0 °C mit Lösungsmitteln und anschließendes Ausgasen des Lösungsmittels durch Entspannen, Evakuieren, Austreiben und Erhitzen mit zusätzlicher Behandlung in einem Vorreaktor ist in der Patentschrift DE 26 10 982 C3 näher beschrieben. Als Zweck des dort beschriebenen Verfahrens ist die Verhinderung der Ablagerung derartiger unlöslicher Schwermetallverbindungen in den Ausgasungskolonnen von Gaswäschen und die Verlängerung der Betriebszeiten angegeben . Allerdings gelangen auch bei Anwendung dieses Verfahrens nicht im Vorreaktor umgewandelte Metallcarbonyle, im Vorwaschmethanol gelöste Metallcarbonyle sowie im Vorreaktor ausgegaste Metallcarbonyle immer noch zum großen Teil in das Sauergas.

Das beladene Hauptwaschmethanol wird nach Erwärmung über Vorreaktor 3 zur Regenerierkolonne 6 gefahren. Dabei fällt ein Sauergas an, welches die im Verlauf der Regeneration nicht umgewandelten Nebenprodukte enthält, wobei die trotz des Vorreaktors 3 im Sauergas verbliebenen Metallcarbonylverbindungen in der Schwefelrückgewinnungsanlage (Clausanlage) zu Ablagerungen und somit zu verkürzten Laufzeiten führen würden.

Bei dem in der DE 26 10 982 C3 beschriebenen Verfahren wird das Vorwaschmethanol nach Erwärmung einer Strippkolonne zugeführt, wo die Flüssigkeit mit den Flashgasen des Vorreaktors gestrippt wird.

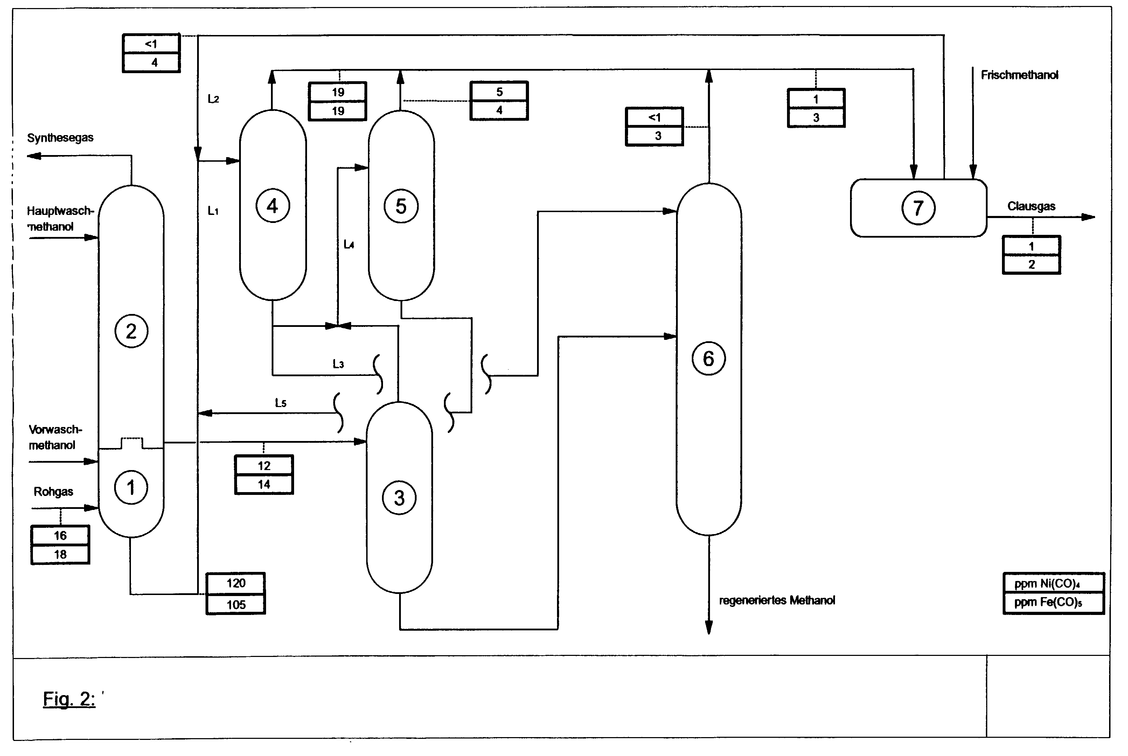

Nach der Teilkondensation der Dämpfe der Strippkolonne und der Regenerationskolonne gemäß der DE 26 10 982 C3 erhält man ein Kondensat, das nicht völlig frei ist von den genannten Schwermetallverbindungen. Das H₂S/CO₂-haltige Gas enthält noch derartige Schwermetallverbindungen, die insbesondere in den nachgeschalteten Clausanlagen zu Anbackungen auf dem Katalysatorbett und damit zu verkürzten Laufzeiten führen. Je nach Reaktortemperatur und Verweilzeit erzielt man einen Abscheidungsgrad der Metallverbindungen, der zwischen 20 und 96 % liegen kann (vgl. Figur 2 der DE 26 10 982 C3).

Demgemäß besteht die Erfindung darin, daß bei einem Verfahren der eingangs angegebenen Art vor Eintritt in eine Regenerierkolonne 6 ein stark beladener und ein schwach beladener Teilstrom der Waschflüssigkeit erhitzt und je einem Reaktor 3, 4 zugeführt wird und daß der schwach beladeneTeilstrom der Waschflüssigkeit gemeinsam mit dem Kondensat, das im Zuge der Teilkondensation der Dämpfe aus dem Kondensationssystem 7 der Regenerierkolonne 6 anfällt, in Verweilzeitreaktor 4 gefahren wird.

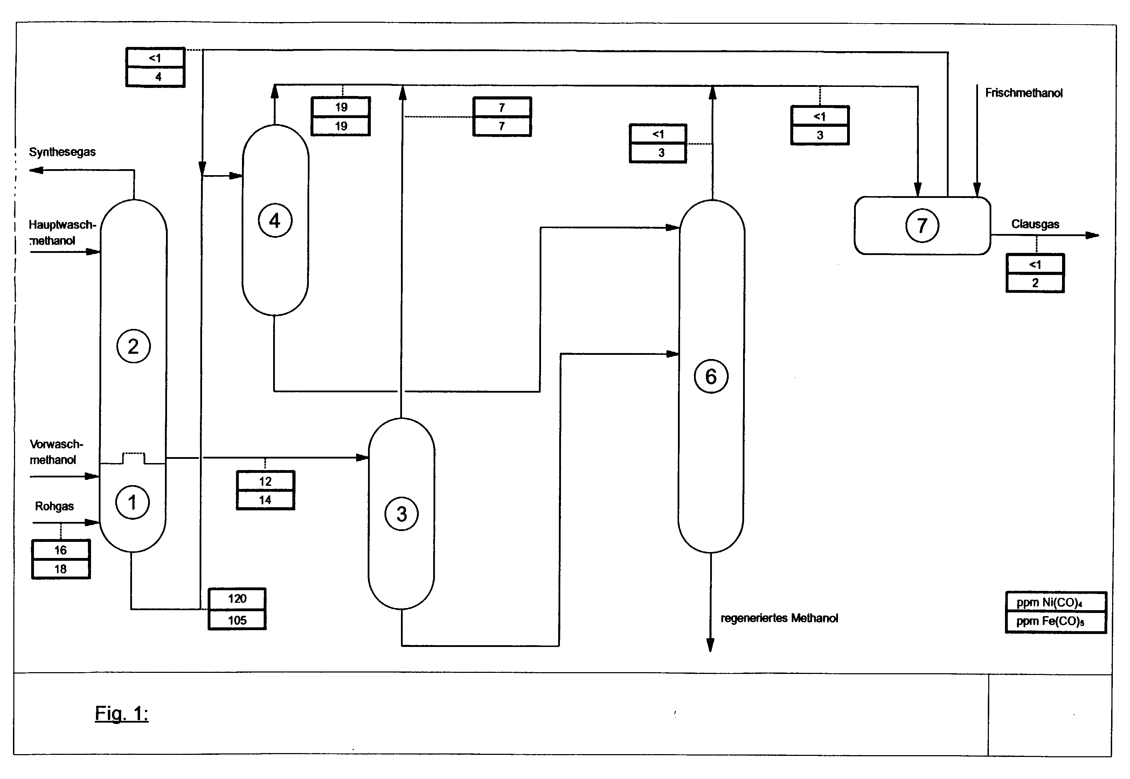

Eine bevorzugte Ausgestaltung des erfindungsgemäßen Verfahrens ist in der Figur 1 der Zeichnung in einem Fließschema unter Angabe der zugehörigen Massen(Gewichts-) Anteile in ppm an Nickel- und Eisencarbonyl dargestellt.

Eine speziellere Ausgestaltung ist der Figur 2 der Zeichnung zu entnehmen.

Hierbei haben die in den Figuren angegebenen Bezugszeichen die folgende Bedeutung:
- 1: Vorwaschkolonne
- 2: Hauptwaschkolonne
- 3: Vorreaktor
- 4: Reaktor
- 5: Flashbehälter
- 6: Regenerierkolonne
- 7: Kondensationssystem
- L1 bis L5: Leitungen wie in Figur 2 eingetragen.

Erfindungsgemäß werden beide beladenen Ströme der Waschflüssigkeit, vorzugsweise Waschmethanolströme, erwärmt und anschließend jeweils einem separaten Verweilzeitreaktor zugeführt. In den Reaktoren 3 und 4 werden die Bedingungen so gewählt, daß die Ausgasung minimiert wird.

Der schwach beladene Teilstrom der Waschflüssigkeit wird gemeinsam mit dem Kondensat, das im Zuge der Teilkondensation der Dämpfe aus dem Kondensationssystem 7 der Regenerierkolonne 6 anfällt, in Verweilzeitreaktor 4 gefahren.

Bei den Schwermetallverbindungen handelt es sich hauptsächlich um Nickeltetracarbonyl (Nickelcarbonyl) und Eisenpentacarbonyl (Eisencarbonyl), die bei 42 bzw. 103 °C sieden. Allerdings verhalten sich die beiden Carbonyle in kleinen Konzentrationen im vorliegenden Mehrkomponenten-System stark nicht-ideal. Es wurde gefunden, daß dieses nicht-ideale Verhalten zu einem erhöhten Nickelübertrag von der Vorwasch- zur Hauptwaschkolonne und dem hohen Nickelgehalt im Flashgas des Vorreaktors sowie im Clausgas beiträgt.

Das Kondensationssystem 7 der Regenerierkolonne 6 kann in einer bevorzugten Ausführung aus zwei Kondensationsstufen aufgebaut sein. Das Gas wird beispielsweise auf etwa 40 °C abgekühlt und teilkondensiert. Das verbleibende Gas wird anschließend beispielsweise auf etwa - 30 °C abgekühlt. Bei dieser Temperatur kondensiert fast das gesamte Methanol und ein Großteil der Carbonyle. Das carbonylhaltige Kondensat wird zu der erfindungsgemäß vorgeschlagenen zusätzlichen Reaktionsstufe rezirkuliert.

Bei Ausgasung einer zu hohen Dämpfemenge aus Vorreaktor 3 können die Dämpfe mit Wasch- oder auch Frischmethanol kontaktiert werden, welches über Verweilzeitreaktor 4 rezirkuliert wird.

Eine weitere Ausgestaltung des erfindungsgemäßen Verfahrens besteht darin, als Waschflüssigkeit unbeladenes Waschmethanol oder auch Frischmethanol in die Gasphase zur zweiten tiefkalten Kondensationsstufe der Regenerierkolonne 6 einzuspritzen und dieses zusammen mit Kondensat über Reaktor 4 zu rezirkulieren. Durch diese Maßnahme wird das Mengenverhältnis von Clausgas zu Kondensat verringert, was eine entsprechende Erhöhung des Anteils der kondensierten Schwermetallverbindungen zur Folge hat. So kann der Nickelcarbonylgehalt im Clausgas um beispielsweise 30 % gesenkt werden.

Reaktor 4 wird zweckmäßig bei einem Druck betrieben, der etwa der Siedetemperatur der kombinierten Reaktoreintrittsströme entspricht.

Bevorzugt ist, Reaktor 4 bei einer Temperatur von 50 bis 180 °C, einem Druck von 5 bis 25 bar sowie einer Verweilzeit von 0,05 bis 1 h zu betreiben.

Eine vorteilhafte Ausgestaltung des vorgeschlagenen Verfahrens besteht darin, den Rückfluß aus den Kondensationsstufen für das Kopfprodukt von Regenerierkolonne 6 über den Verweilzeitreaktor 4 für die schwach beladene Waschflüssigkeit zum Kopf der Regenerierkolonne 6 zurückzuführen.

Es ist auch möglich, den schwach beladenen Teilstrom L1 der Waschflüssigkeit aus Reaktor 4, ggf. zusammen mit Flashgasen aus Reaktor 3 über L4 einem Flashbehälter 5 zuzuführen, dessen Dämpfe über das Kondensationssystem 7 gefahren und über L2 rezirkuliert werden (vgl. Figur 2). Das Sumpfprodukt von Flashbehälter 5 wird über L5 und L1 rezirkuliert.

Eine weitere bevorzugte Ausgestaltung liegt darin, die Flüssigphase vom Flashbehälter 5 zum Reaktor 4 zu rezirkulieren.

Mit Hilfe der erfindungsgemäßen Rezirkulation wird der nicht quantitative Abbau der Schwermetallkomponenten in dem Vorreaktor 3 wesentlich beeinflußt. Die in die Gasphase der als Flashbehälter fungierenden Strippkolonne 5 übergegangenen Schwermetallkomponenten gelangen zum Teil in das Kondensat des Kondensationssystems 7 der Regenerierkolonne 6 und werden zu dem Reaktor 4 zurückgeführt. Im Reaktor 4 werden die Schwermetallverbindungen bei etwa 100 °C umgesetzt und ausgefällt. Der Druck wird so hoch gewählt, beispielsweise 15 bar, daß nur geringe Mengen an Dampf ausgasen. Hierdurch verbleiben die Schwermetallverbindungen überwiegend in der Flüssigphase.

Mit dem erfindungsgemäßen Verfahren lassen sich die Carbonyle im Clausgas, je nach Wahl der Verfahrensbedingungen in den beiden Reaktoren 3 und 4 und in Flashbehälter 5 sowie in Abhängigkeit von den über den Reaktor 4 rezirkulierten Kondensatmengen und der Einspritzmethanolmenge um bis zu 95 oder sogar 99 % reduzieren.

## Patentansprüche

1. Verfahren zum Reinigen von Druckgasen durch Tieftemperaturgaswäsche, anschließendes Ausgasen der beladenen Waschflüssigkeit durch Entspannen, Evakuieren, Austreiben und Erhitzen, dadurch gekennzeichnet, daß vor Eintritt in eine Regenerierkolonne (6) ein stark beladener und ein schwach beladener Teilstrom der Waschflüssigkeit erhitzt und je einem Reaktor (3, 4) zugeführt werden und daß der schwach beladene Teilstrom der Waschflüssigkeit gemeinsam mit dem Kondensat, das im Zuge der Teilkondensation der Dämpfe in dem Kondensationssystem (7) der Regenerierkolonne (6) anfällt, in Verweilzeitreaktor (4) gefahren wird.

2. Verfahren nach Anspruch 1, dadurch gekennzeichnet, daß das Kondensationssystem (7) der Regenerierkolonne (6) aus zwei Kondensationsstufen aufgebaut ist.

3. Verfahren nach Anspruch 1 oder 2, dadurch gekennzeichnet, daß als Waschflüssigkeit unbeladenes Waschmethanol oder auch Frischmethanol in die Gasphase zur zweiten tiefkalten Kondensationsstufe der Regenerierkolonne (6) eingespritzt wird.

4. Verfahren nach einem der Ansprüche 1 bis 3, dadurch gekennzeichnet, daß Reaktor (4) bei einem Druck, der etwa der Siedetemperatur der kombinierten Reaktoreintrittsströme entspricht, betrieben wird.

5. Verfahren nach einem der Ansprüche 1 bis 4, dadurch gekennzeichnet, daß Reaktor (4) bei einer Temperatur von 50 bis 180°C, einem Druck von 5 bis 25 bar sowie einer Verweilzeit von 0,05 bis 1 h betrieben wird.

6. Verfahren nach einem der Ansprüche 1 bis 5, dadurch gekennzeichnet, daß der schwach beladene Teilstrom der Waschflüssigkeit aus Reaktor (4), ggf. zusammen mit Flashgasen aus Reaktor (3) einem Flashbehälter (5) zugeführt wird, dessen Dämpfe über Kondensationssystem (7) gefahren werden.

7. Verfahren nach einem der Ansprüche 1 bis 6, dadurch gekennzeichnet, daß die Flüssigphase von Flashbehälter (5) zu Reaktor (4) rezirkuliert wird.

## Claims

1. Method of purifying pressurized gases by low-temperature gas scrubbing and subsequently outgassing the laden scrubbing liquid by pressure release, evacuation, stripping and heating, characterized in that, before entering a regenerating column (6), a heavily laden and a lightly laden substream of the scrubbing liquid are heated and each fed to a reactor (3, 4) and in that the lightly laden substream of the scrubbing liquid is fed into the residence-time reactor (4) together with the condensate which is produced in the course of the partial condensation of the vapours in the condensation system (7) of the regenerating column (6).

2. Method according to Claim 1, characterized in that the condensation system (7) of the regenerating column (6) is made up of two condensation stages.

3. Method according to Claim 1 or 2, characterized in that unladen scrubbing methanol or, alternatively, make-up methanol is injected as scrubbing liquid into the gas phase for the second low-temperature condensation stage of the regenerating column 6.

4. Method according to one of Claims 1 to 3, characterized in that the reactor (4) is operated at a pressure which corresponds approximately to the boiling point of the combined reactor inlet streams.

5. Method according to one of Claims 1 to 4, characterized in that the reactor (4) is operated at a temperature of 50 to 180°C, a pressure of 5 to 25 bar and a residence time of 0.05 to 1 h.

6. Method according to one of Claims 1 to 5, characterized in that the lightly laden substream of the scrubbing liquid from reactor (4), optionally together with flash gases from reactor (3), is fed to a flash container (5) whose vapours are fed via condensation system (7).

7. Method according to one of Claims 1 to 6, characterized in that the liquid phase of flash container (5) is recirculated to reactor (4).

## Revendications

1. Procédé d'épuration de gaz comprimés par des lavages à basse température, évacuation consécutive des gaz du liquide de lavage chargé par détente, mise sous vide, expulsion et chauffage,
caractérisé en ce qu'
on chauffe préalablement à l'entrée dans une colonne de régénération (6) un courant partiel fortement chargé et un courant partiel faiblement chargé de liquide de lavage et on amène à un réacteur (3), (4) et en ce qu'on conduit le courant partiel faiblement chargé de liquide de lavage conjointement avec le condensat qui se produit au cours de la condensation partielle des vapeurs dans le système de condensation (7) de la colonne de régénération (6), dans le réacteur de durée de contact.

2. Procédé selon la revendication 1,
caractérisé en ce que
le système de condensation (7) de la colonne de régénération (6) est constitué de deux étapes de condensation.

3. Procédé selon la revendication 1 ou la revendication 2,
caractérisé en ce que
comme liquide de lavage, on injecte du méthanol de lavage non chargé ou aussi du méthanol frais dans la phase gazeuse en vue de la deuxième étape de condensation très froide de la colonne de régénération (6).

4. Procédé selon l'une des revendications 1 à 3,
caractérisé en ce qu'
un réacteur (4) est mis en fonctionnement à une pression qui correspond environ à la température d'ébullition des courants d'entrée du réacteur, combinés.

5. Procédé selon l'une des revendications 1 à 4,
caractérisée en ce qu'
un réacteur (4) est mis en fonctionnement à une température allant de 50 à 180°C, à une pression allant de 5 à 25 bars ainsi que pour une durée de contact de 0,05 à 1 h.

6. Procédé selon l'une des revendications 1 à 5,
caractérisé en ce que
le courant partiel faiblement chargé de liquide de lavage provenant du réacteur (4), le cas échéant conjointement avec des gaz flash provenant du réacteur (3), est amené à un récipient flash (5) dont les vapeurs sont conduites par l'intermédiaire d'un système de condensation (7).

7. Procédé selon l'une des revendications 1 à 6,
caractérisé en ce que
la phase liquide est remise en circulation du récipient flash (5) au réacteur (4).
